Europäisches Patentamt

European Patent Office

Office européen des brevets

(11) Veröffentlichungsnummer: **0 337 381**

**A1**

(12) # EUROPÄISCHE PATENTANMELDUNG

(21) Anmeldenummer: **89106392.7**

(22) Anmeldetag: **11.04.89**

(51) Int. Cl.⁴: **B23B 47/24**

(30) Priorität: **15.04.88 DE 3812526**

(43) Veröffentlichungstag der Anmeldung:
**18.10.89 Patentblatt 89/42**

(84) Benannte Vertragsstaaten:
**CH DE FR GB IT LI NL SE**

(71) Anmelder: **C. & E. FEIN GmbH & Co.**
**Leuschnerstrasse 41-47**
**D-7000 Stuttgart 1(DE)**

(72) Erfinder: **Die Erfinder haben auf ihre**
**Nennung verzichtet**

(74) Vertreter: **Hoeger, Stellrecht & Partner**
**Uhlandstrasse 14 c**
**D-7000 Stuttgart 1(DE)**

(54) **Bohrständer.**

(57) Um einen Bohrständer (10) mit einer verschieblich gelagerten Halterung (16) für eine Bohrwerkzeugmaschine (18), welche mittels eines bei Erreichen eines Überlastzustands abschaltbaren Vorschubantriebs in Vorschubrichtung antreibbar ist, derart zu verbessern, daß der Vorschubantrieb stets rechtzeitig zur Schonung des Bohrers abgeschaltet wird, sobald letzterer auf einen zu großen Widerstand stößt, wird vorgeschlagen, daß die Bohrwerkzeugmaschine (18) und/oder die Halterung (16) so mit dem Vorschubantrieb verbunden sind, daß die Bohrwerkzeugmaschine (18) und/oder die Halterung (16) relativ zum Vorschubantrieb entgegengesetzt zur Vorschubrichtung unter Überwindung einer Gegenkraft bewegbar sind, daß ein Schaltelement (56) zur Überwachung der Relativbewegung vorgesehen ist, und daß von dem Schaltelement (56) ein Signal zum Stillsetzen des Vorschubantriebs ableitbar ist.

FIG.1

EP 0 337 381 A1

# BOHRSTÄNDER

Die Erfindung betrifft einen Bohrständer mit einer verschieblich gelagerten Halterung für eine Bohrwerkzeugmaschine, welche mittels eines bei Erreichen eines Überlastzustands abschaltbaren Vorschubantriebs in Vorschubrichtung antreibbar ist.

Bisher sind Bohrständer bekannt, die einen elektrischen Vorschubmotor umfassen, der die verschieblich gelagerte Halterung für die Bohrwerkzeugmaschine samt dieser in Vorschubrichtung bewegt. Nachteilig bei diesem bekannten Bohrständer ist, daß der vorschubantrieb nicht automatisch abgeschaltet wird, wenn ein Bohrer der Bohrwerkzeugmaschine auf ein Hindernis trifft bzw. wenn der vom Werkstück dem Werkzeug entgegengesetzte Widerstand sehr groß wird. In diesen Fällen ist eine Zerstörung der Werkzeugspitze und teilweise nachfolgend auch eine Zerstörung des Werkstücks selbst nicht vermeidbar.

Aus der DE-OS 32 29 306 ist ein Bohrständer bekannt, welcher bei Erreichen eines Überlastzustandes den Vorschubantrieb abschaltet. Allerdings erfolgt die Erfassung des Überlastzustandes durch Messung der elektrischen Motorlast, d.h. des am Motor auftretenden Gegendrehmomentes. Bei einer derartigen Erfassung wird der Vorschubantrieb nicht stets rechtzeitig genug abgeschaltet.

Aufgabe der Erfindung ist es, den eingangs beschriebenen Bohrständer so zu verbessern, daß der Vorschubantrieb stets rechtzeitig zur Schonung des Bohrers abgeschaltet wird, sobald letzterer auf einen zu großen Widerstand stößt.

Diese Aufgabe wird bei einem Bohrständer der eingangs beschriebenen Art erfindungsgemäß dadurch gelöst, daß die Bohrwerkzeugmaschine und/oder die Halterung so mit dem Vorschubantrieb verbunden sind, daß die Bohrwerkzeugmaschine und/oder die Halterung relativ zum Vorschubantrieb entgegengesetzt zur Vorschubrichtung gegen eine Gegenkraft bewegbar sind, daß ein Schaltelement zur Überwachung der Relativbewegung vorgesehen ist und daß von dem Schaltelement ein Signal zum Stillsetzen des Vorschubantriebs ableitbar ist.

Diese Vorrichtung baut auf dem Prinzip auf, daß die Vorschubbewegung des Vorschubantriebs mit der Vorschubbewegung der Bohrwerkzeugmaschine und/oder der Halterung verglichen wird, und daß in dem Falle, daß sich die Vorschubbewegungen dieser beiden Teile des Bohrständers unterscheiden. der Vorschubantrieb stillgesetzt wird, da eine unterschiedliche Vorschubbewegung von Antrieb und Werkzeug bzw. Halterung nur bedeuten kann, daß der Bohrer auf einen zu großen Widerstand gestoßen ist.

Die erfindungsgemäße Vorrichtung läßt sich nun nicht nur dazu verwenden, um sicherzustellen, daß die Werkzeugspitze des Bohrers nicht zerstört wird im Falle, daß der Bohrer auf ein Hindernis stößt, sondern auch dazu, definierte Bohrtiefen zu erreichen, wenn man nämlich am Bohrständer einen Anschlag für die Bohrwerkzeugmaschine montiert, so daß der Bohrer nach einer vorher definierbaren Vorschubbewegung und nach Erreichen der gewünschten Bohrungstiefe auf den Widerstand des Anschlags stößt, wodurch dann ebenfalls von dem Schaltelement das Stillsetz-Signal für den Vorschubantrieb erzeugt wird.

Die erfindungsgemäße Konstruktion eignet sich insbesondere für Bohrständer, die eine Haltevorrichtung zur räumlichen Fixierung gegenüber einem zu bearbeitenden Gegenstand aufweisen. Dies gilt insbesondere für Magnetbohrständer, bei denen die Haltevorrichtung einen Fuß mit einem Magneten umfaßt oder solche Bohrständer, die mit einem Saugfuß festgelegt werden.

Bei einer bevorzugten Ausführungsform ist vorgesehen, daß die Gegenkraft einstellbar ist. Dadurch läßt sich die Schwelle für eine Auslösung des Stillsetz-Signals dem zu bearbeitenden Material und/oder dem verwendeten Werkzeug anpassen.

Insbesondere bei diesen Bohrständern ist es zweckmäßig, während dem Betrieb der Bohrwerkzeugmaschine die Haltekraft der Haltevorrichtung zu kontrollieren und beim Nachlassen der Magnetfeldstärke bzw. des Vakuums im Saugfuß die Vorschubgeschwindigkeit herabzusetzen bzw. bei einem zu starken Abfall der Haltekraft der Haltevorrichtung den Vorschubantrieb stillzusetzen, so daß keinesfalls eine Ablösung des Bohrständers durch eine zu große Vorschubkraft des Vorschubantriebs erfolgen kann.

Bei bevorzugten Ausführungsformen umfaßt der Vorschubantrieb eine von einem Antriebsritzel bewegbare Zahnstange. Hierbei wird dann bevorzugt die Halterung für die Bohrwerkzeugmaschine in Vorschubrichtung verschieblich an der Zahnstange montiert, so daß die Halterung gegenüber der Zahnstange eine Ausweichbewegung ausführen kann, wenn der Bohrer auf einen zu großen Widerstand trifft bzw. wenn die Bohrwerkzeugmaschine auf den gesetzten Anschlag trifft. Die Gegenkraft kann hier beispielsweise durch eine Klemmwirkung und die damit verbundene Reibung der Zahnstange an der Halterung erzeugt werden.

Um bei dieser bevorzugten Konstruktion eine definierte Lage der Zahnstange relativ zu der Halterung zu erreichen, wird die Zahnstange durch einen elastischen Kraftspeicher, insbesondere eine Feder oder ein Tellerfedernpaket, in einer ersten Endstellung gegenüber der Halterung fixiert. Eine Relativbewegung der Zahnstange gegenüber der Halterung ist dann nur gegen die Federkraft möglich. Diese Federkraft kann beispielsweise so eingestellt werden, daß sie eine Kraft von ca. 70 kp entspricht.

Zweckmäßigerweise ist die Zahnstange gleichzeitig das Betätigungsglied für das Schaltelement und überführt dieses in seinen anderen Schaltzustand, wenn sie von der ersten Endstellung in eine zweite Endstellung gegenüber der Halterung überführt wird. Hierdurch wird eine direkte Überwachung der Relativbewegung von Vorschubantrieb gegenüber der Bohrwerkzeugmaschine erreicht. Vorzugsweise wird der Vorschubantrieb einen Elektromotor mit einem regel baren Motorstrom umfassen, wodurch die Vorschubbewegung auf das verwendete Werkzeug und das zu bearbeitende Material angepaßt werden kann. Gleichzeitig kann hiermit bei zu geringer Haltekraft des Haltemagneten oder bei abfallendem Vakuum im Saugfuß des Bohrständers der Vorschub reduziert werden.

Bei einer bevorzugten Ausführungsform wird der Motorstrom generell auf einen Maximalwert begrenzt, so daß eine Überlastung des Motors ausgeschlossen werden kann.

Bei bevorzugten Ausführungsformen der Erfindung ist eine Zustandsanzeige vorgesehen, die den Schaltzustand des Schaltelements und damit den Betriebszustand des Magnetbohrständers anzeigt.

Für das Schaltelement, das bis jetzt noch nicht näher definiert wurde, eignen sich eine Vielzahl von mechanischen, optischen, induktiven, magnetischen und sonstigen Schaltelementen, wobei die einzige Voraussetzung für diese Schaltelemente deren Betriebssicherheit unter den Betriebsbedingungen des Bohrständers ist. Neben einem kleinen Schaltweg wird man deshalb insbesondere auch eine besondere Vibrationsfestigkeit des Schaltelements fordern.

Als Beispiele seien hier lediglich mechanische Mikroschalter erwähnt.

Zur Festlegung einer Bohrtiefe ist vorzugsweise ein die Bewegung der Bohrwerkzeugmaschine in Vorschubrichtung begrenzender einstellbarer Anschlag vorgesehen.

Diese und weitere Vorteile der Erfindung werden im folgenden anhand der Zeichnung noch näher erläutert. Es zeigen im einzelnen:

Fig. 1 eine teilweise aufgebrochene, schematisierte Ansicht eines erfindungsgemäßen Bohrständers;

Fig. 2 eine Schnittansicht längs Linie 2-2 in Fig. 1 und

Fig. 3 ein Blockschaltbild für eine Schaltzustandsanzeige des Bohrständervorschubantriebs.

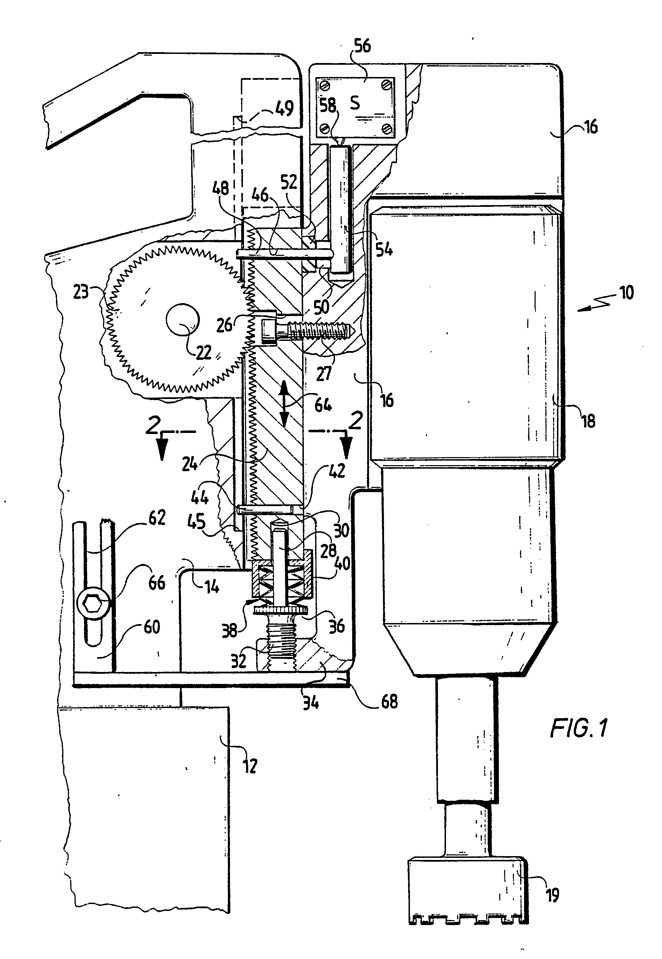

Fig. 1 zeigt einen im Ganzen mit dem Bezugszeichen 10 gekennzeichneten Bohrständer, der über einen Magnetfuß 12 an einem nicht gezeigten Gegenstand festgelegt ist.

Auf dem Magnetfuß 12 ist eine Führung 14 des Bohrständers 10 montiert, in der eine Halterung 16 für eine Bohrwerkzeugmaschine 18 über eine Schwalbenschwanzführung 20 gehalten ist. In der in Fig. 1 gezeigten Bohrwerkzeugmaschine 18 ist ein Bohrer mit einer Bohrkrone 19 montiert.

Die Führung 14 lagert außerdem eine Antriebswelle 22 mit einem darauf drehfest befestigten Antriebsritzel 23. Die Antriebswelle 22 wird von einem in Fig. 1 nicht dargestellten Motor M über ein ebenfalls nicht dargestelltes Getriebe angetrieben und arbeitet über das Antriebsritzel 23 auf eine Zahnstange 24, die an der Halterung 16 so gehalten ist, daß sie eine Ausweichbewegung als Relativbewegung gegenüber der Halterung 16 ausführen kann.

Dies wird dadurch erreicht, daß die Zahnstange 24 zum einen ein Langloch 26 aufweist, durch welches eine Schraube 27 durchgreift, die mit der Halterung 16 verschraubt ist. Am unteren Ende ist die Zahnstange 24 von einem Führungsbolzen 28 gehalten, der mit einem Ende in ein entsprechendes Sackloch 30 der Zahnstange 24 eingreift. An seinem anderen Ende weist der Führungsbolzen 28 ein Außengewinde 32 auf, das in einen Halteflansch 34 der Halterung 16 eingeschraubt ist. In Längsrichtung benachbart zum Außengewinde 32 ist an den Führungsbolzen 28 ein Rändelrad 36 angeformt, mit dem sich der Führungsbolzen 28 mehr oder weniger weit in den Flansch 34 eindrehen läßt. Das Rändelrad 36 dient gleichzeitig zum Abstützen eines Tellerfedernpakets 38, das auf den Führungsbolzen 28 von seinem in das Sackloch 30 eingreifenden Ende her aufgeschoben ist. Zwischen dem Tellerfedernpaket 38 und der Zahnstange 24 ist noch eine Führungshülse 40 auf den Führungsbolzen 28 aufgeschoben, die einen Teil des Tellerfedernpakets 38 übergreift.

Am unteren Ende der Zahnstange 24 ist in eine Bohrung 42 ein Anschlagstift 44 eingesetzt, der mit seinem einen Ende über die Zähne der Zahnstange 24 hinaussteht und zusammen mit einer an der Führung 14 angeordneten Anschlagfläche 45 eine Begrenzung für den Verschiebeweg der Halterung 16 gegenüber der Führung 14 nach unten definiert.

Am oberen Ende der Zahnstange ist eine weitere Bohrung 46 vorgesehen, in die ein oberer Anschlagstift 48 eingesetzt ist, der mit einem Ende ebenfalls über die Zähne der Zahnstange 24 hinaussteht und nach oben hin zusammen mit einer an der Führung 14 angeordneten Anschlagfläche 49 eine Begrenzung für die Verschiebebewegung der Halterung 16 gegenüber der Führung 14 definiert und damit auch den höchsten mit der Bohrwerkzeugmaschine 18 zu erreichenden Punkt festlegt.

Anstelle der Anschlagflächen 45 und 49 wäre es aber auch möglich, eine Begrenzung der Verschiebebewegung der Halterung 16 dadurch zu erreichen, daß die Anschlagstifte 44 und 48 gegen das Antriebsritzel 23 laufen.

Mit seinem entgegengesetzten Ende ragt der obere Anschlagsbolzen 48 nach hinten aus der Zahnstange 24 heraus in einen Hohlraum 50 in der Halterung 16. Dieser Hohlraum 50 ist über eine Dichtung 52, durch die der Anschlagstift 48 hindurchgreift, gegenüber der Zahnstange 24 abgedichtet. Der obere Anschlagstift trägt in einer parallel zur Zahnstange 24 verlaufenden Bohrung einen Bolzen 54, der mit einem Ende in Kontakt mit einem Betätigungselement 58 eines Schalters 56 bringbar ist.

Der Hohlraum 50 ist hierbei so ausgebildet, daß er im wesentlichen aus zwei senkrecht zueinander verlaufenden Bohrungen besteht, wobei die eine das Austreten des Anschlagstifts 48 aus der Zahnstange 24 erlaubt und die andere Bohrung im wesentlichen den Bolzen 54 aufnimmt und führt.

Im normalen Betriebszustand nimmt die Zahnstange 24 zu der Halterung 16 die in der Fig. 1 gezeigte relative Position ein. Hierbei drückt das Tellerfedernpaket 38, das sich auf dem Rändelrad 36 des Führungsbolzens 28 abstützt, die Zahnstange 24 nach oben, so daß die Schraube 27 am unteren Ende des Langlochs 26 anliegt.

Bei einer weiteren Abwärtsbewegung, bei der entweder der Bohrkopf 19 auf einen zu großen Widerstand trifft oder aber die Bohrwerkzeugmaschine 18 auf einen Anschlag (nicht dargestellt) trifft, verschiebt sich die Zahnstange 24 gegenüber der Halterung 16 relativ nach unten, so lange, bis die Schraube 27 am oberen Ende des Langlochs 26 zum Anliegen kommt. Gleichzeitig verschiebt sich der obere Anschlagbolzen 48 in dem Hohlraum 50 nach unten, wobei das Material der Dichtung 52 im unteren Bereich zusammengepreßt wird. Der Bolzen 54, der von dem oberen Anschlagbolzen 48 getragen wird, verschiebt sich gleichzeitig innerhalb der senkrechten Bohrung des Hohlraums 50 nach unten und gibt das Betätigungselement 58 des Schalters 56 frei. Dies führt zu einem Wechsel des Schaltzustands des Schalters 56 und gleichzeitig zu einem Stillsetzen des Vorschubantriebs und des Antriebsritzels 23.

Falls die Halterung 16 mit der Zahnstange 24 so weit abgesenkt wird, daß die Anschlagfläche 45 in Kontakt mit dem unteren Anschlagstift 44 kommt, so wird über eine in der Zeichnung nicht dargestellte Motorstromregelung der maximale Motorstrom auf 5 Ampere begrenzt, so daß keine Überhitzung des Motors eintritt.

Zur Festlegung einer maximalen Bohrtiefe ist an der Führung 14 eine Leiste 60 mit einem Langloch 62 in Vorschubrichtung 64 verschieblich und durch mindestens eine Schraube 66 feststellbar gehalten. Diese Leiste 60 trägt einen Anschlagfinger 68, welcher sich in Richtung des Halteflansches 34 erstreckt und zwar so, daß der Halteflansch 34 bei Erreichen der maximalen Bohrtiefe auf diesem aufsteht und eine Weiterbewegung des Halteflansches 34 in Vorschubrichtung nicht mehr möglich ist.

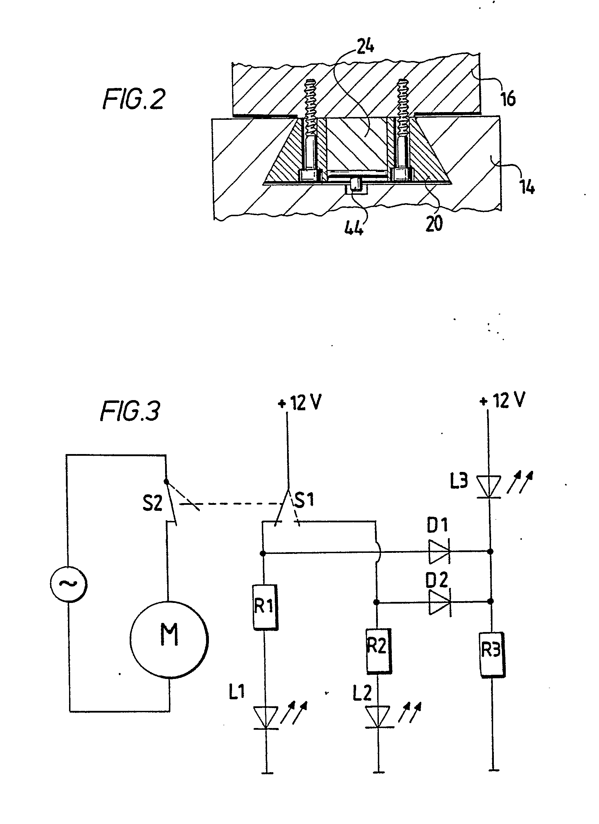

Fig. 2 zeigt im Schnitt die Schwalbenschwanzführung 20, die über Schraubverbindungen an der Halterung 16 angebracht ist und in eine komplementäre Ausnehmung der Führung 14 eingreift und dort verschieblich gehalten ist.

In Fig. 3 ist beispielhaft ein Schaltbild für eine Zustandsanzeige angegeben. Die Zustandsanzeige arbeitet mit einer Gleichspannung von 12 Volt, mit der je nach Schaltungszustand drei verschiedene Leuchtdioden über Vorwiderstände R1, R2 und R3 angesteuert werden. Im normalen Betriebszustand, dessen Schalterstellung die Fig. 3 zeigt, ist die Spannungsquelle über den Schalter S1 und über den Widerstand R1 mit der grünen Leuchtdiode L1 verbunden. Gleichzeitig wird über den Schalter S1 und die Diode D1 der 12-Volt-Pegel an den Ausgang der Leuchtdiode L3 gegeben, so daß kein Spannungsabfall an der Diode L3 vorhanden ist und diese Leuchtdiode dementsprechend dunkel bleibt. Bei einem Wechsel des Schaltzustands des Schalters S1 wird zunächst der Kontakt zu dem linken Zweig mit dem Widerstand R1 und der Leuchtdiode L1 unterbrochen. In diesem Zeitraum tritt ein Spannungsabfall an der Diode L3 auf und diese leuchtet gelb. Sobald die zweite definierte Schalterstellung des Schalters S1 erreicht wird, bei dem die Spannungsquelle über den Widerstand R2 mit der Leuchtdiode L2 verbunden ist, liegen wieder 12 Volt (jetzt über die Diode D2) am Ausgang der Leuchtdiode L3 an, so daß an dieser kein Spannungsabfall mehr auftritt und die Diode L3 somit erlöscht. Gleichzeitig fließt jedoch ein Strom über den Widerstand R2 und die Leuchtdiode L2, so daß diese aufleuchtet. Diese Schalterstellung entspricht dem abgeschalteten Zustand des Vortriebsmotors, der in dem Blockschaltbild der Fig. 3 mit M dargestellt ist. Ein Wechsel in der Schalterstellung des Schalters S1 ent- spricht einem Auftrennen der elektrischen Verbindung zur Netzspannung über den Schalter S2, der bei grün leuchtender Diode L1 den Motor mit der Wechselspannung versorgt und dagegen bei rot leuchtender Leuchtdiode L2 dessen Stromzuführung unterbricht.

Über eine Regelung des Motorstroms erfolgt eine Vorschubregelung, die im folgenden beschrieben ist:

Je nach Bohrwerkzeugmaschine und zu bearbeitendem Material wird eine Vorschubgeschwindigkeit eingestellt, der von dem Vorschubantrieb eingehalten wird, bis der aufgenommene Motorstrom den vorgegebenen Maximalwert von beispielsweise 5 Ampere erreicht. Ein weiteres Ansteigen des Motorstroms würde zu einer Überlastung des Motors führen und wird tunlichst vermieden. Deshalb wird von diesem Zeitpunkt an der Vorschub in Abhängigkeit vom Motorstrom geregelt, wobei als Regelgröße der Nennstrom von 5 Ampere zugrunde gelegt wird.

Über Meßsonden kann die Haltekraft des Magnetfußes 12 des Bohrständers 10 ständig überwacht werden und als limitierende Größe in die Vorschubregelung mit einbezogen werden. Ist die Haltekraft des Magneten (oder auch beispielsweise eines Saugfußes) für eine bestimmte Vorschubgeschwindigkeit zu gering, so wird der Vorschub in analoger Weise zum obigen Beispiel reduziert. Treten infolge eines größeren Widerstands des Werkstücks für das Werkzeug oder auch durch eine falsche Bedienung des Geräts Druckspitzen auf, so kann die den Vorschub übertragende Zahnstange gegen die Kraft des Tellerfedernpakets 38 ausweichen, wobei gleichzeitig der Mikroschalter 56 betätigt wird, der den Vorschub abstellt.

## Ansprüche

1. Bohrständer mit einer verschieblich gelagerten Halterung für eine Bohrwerkzeugmaschine, welche mittels eines bei Erreichen eines Überlastzustands abschaltbaren Vorschubantriebs in Vorschubrichtung antreibbar ist, **dadurch gekennzeichnet,** daß die Bohrwerkzeugmaschine (18) und/oder die Halterung (16) so mit dem Vorschubantrieb verbunden sind, daß die Bohrwerkzeugmaschine (18) und/oder die Halterung (16) relativ zum Vorschubantrieb entgegengesetzt zur Vorschubrichtung unter Überwindung einer Gegenkraft bewegbar sind, daß ein Schaltelement (56) zur Überwachung der Relativbewegung vorgesehen ist, und daß von dem Schaltelement (56) ein Signal zum Stillsetzen des Vorschubantriebs ableitbar ist.

2. Bohrständer nach Anspruch 1, dadurch gekennzeichnet, daß der Ständer (10) eine Haltevorrichtung (12) zur räumlichen Fixierung gegenüber einem zu bearbeitenden Gegenstand umfaßt.

3. Bohrständer nach Anspruch 2, dadurch gekennzeichnet, daß die Haltevorrichtung (12) einen Fuß mit einem Magneten oder einen Saugfuß umfaßt.

4. Bohrständer nach einem oder mehreren der Ansprüche 1 bis 3, dadurch gekennzeichnet, daß die Gegenkraft einstellbar ist.

5. Bohrständer nach einem oder mehreren der voranstehenden Ansprüche, dadurch gekennzeichnet, daß der Vorschubantrieb eine von einem Antriebsritzel (23) bewegbare Zahnstange (24) umfaßt.

6. Bohrständer nach Anspruch 5, dadurch gekennzeichnet, daß die Zahnstange (24) in Vorschubrichtung verschieblich an der Halterung (16) montiert ist.

7. Bohrständer nach Anspruch 6, dadurch gekennzeichnet, daß die Zahnstange (24) durch einen elastischen Kraftspeicher (38) in einer ersten Endstellung gegenüber der Halterung (16) gehalten ist, wobei der elastische Kraftspeicher die Gegenkraft ausübt.

8. Bohrständer nach Anspruch 7, dadurch gekennzeichnet, daß das Schaltelement (56) durch die Zahnstange (24) betätigbar ist, wenn diese von der ersten Endstellung in eine zweite Endstellung gegenüber der Halterung (16) entgegen der Gegenkraft überführt wird.

9. Bohrständer nach einem oder mehreren der voranstehenden Ansprüche, dadurch gekennzeichnet, daß der Vorschubantrieb einen Elektromotor mit regelbarem Motorstrom umfaßt.

10. Bohrständer nach Anspruch 9, dadurch gekennzeichnet, daß der Motorstrom auf einen Maximalwert begrenzbar ist.

11. Bohrständer nach einem der Ansprüche 9 oder 10, dadurch gekennzeichnet, daß die Vorschubgeschwindigkeit des Vorschubantriebs in Abhängigkeit der Haltekraft der Haltevorrichtung (12) des Ständers (10) regelbar ist.

12. Bohrständer nach einem oder mehreren der voranstehenden Ansprüche, dadurch gekennzeichnet, daß eine Zustandsanzeige für den Schaltzustand des Schaltelements (56) vorhanden ist.

13. Bohrständer nach einem der voranstehenden Ansprüche, dadurch gekennzeichnet, daß ein die Bewegung der Bohrwerkzeugmaschine in Vorschubrichtung begrenzender, verstellbarer und festlegbarer Anschlag (60,68) vorgesehen ist.

FIG.1

FIG.2

FIG.3

**Europäisches Patentamt**

# EUROPÄISCHER RECHERCHENBERICHT

| | EINSCHLÄGIGE DOKUMENTE | | EP 89106392.7 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - C - 561 361 (HERRMANN) * Gesamt * -- | 1,5,6, 7,8,9 | B 23 B 47/24 |
| D,A | DE - A1 - 3 229 306 (NITTO KOHKI CO.LTD.) * Fig. 1-9 * -- | 1,2,3 | |
| A | DE - C - 703 806 (WALTHER) * Fig.; Anspruch 1 * -- | 1 | |
| A | DE - B - 1 154 993 (MASCHINENFABRIK AUGSBURG-NÜRNBERG AG) * Fig. 2,4; Spalte 4, Zeile 56 - Spalte 5, Zeile 9 * -- | 1,4 | |
| A | DE - A1 - 3 009 516 (HOUGEN) * Fig. 1; Seite 16, letzter Absatz; Seite 17, 1. Absatz * -- | 1,2,3, 5 | RECHERCHIERTE SACHGEBIETE (Int. Cl.4) |
| A | US - A - 3 456 738 (HARRY) * Fig. 1; Spalte 3, Zeilen 64-68 * ---- | 1,2,3, 5,13 | B 23 B 47/00 B 23 B 45/00 B 23 B 25/00 B 23 B 31/00 B 23 Q 5/00 B 23 Q 11/00 B 23 Q 15/00 |

Der vorliegende Recherchenbericht wurde für alle Patentansprüche erstellt.

| Recherchenort | Abschlußdatum der Recherche | Prüfer |
|---|---|---|
| WIEN | 23-06-1989 | BRÄUER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82